(19) **Europäisches Patentamt**
**European Patent Office**
**Office européen des brevets**

(11) **EP 2 390 275 A1**

(12) **EUROPÄISCHE PATENTANMELDUNG**

(43) Veröffentlichungstag:
**30.11.2011  Patentblatt 2011/48**

(21) Anmeldenummer: **10164188.4**

(22) Anmeldetag: **27.05.2010**

(51) Int Cl.:
***C08G 18/40*** *(2006.01)*          ***C08G 18/42*** *(2006.01)*
***C08G 18/44*** *(2006.01)*          ***C08G 18/63*** *(2006.01)*
***B01J 20/22*** *(2006.01)*          ***B01J 20/26*** *(2006.01)*
***C02F 1/00*** *(2006.01)*          ***C02F 1/68*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **BASF SE**
**67056 Ludwigshafen (DE)**

(72) Erfinder: **Die Erfindernennung liegt noch nicht vor**

(54) **Ölaufnehmende Polyurethanschwämme mit guten mechanischen Eigenschaften**

(57) Die vorliegende Erfindung betrifft ein Verfahren zur Adsorption und/oder Absorption von Öl, bei dem man einen Polyurethanschwamm mit hervorragenden mechanischen Eigenschaften in Kontakt mit Öl bringt.

**EP 2 390 275 A1**

**Beschreibung**

Die vorliegende Erfindung betrifft ein Verfahren zur Adsorption und/oder Absorption von Öl, bei dem man einen Polyurethanschwamm mit hervorragenden mechanischen Eigenschaften in Kontakt mit Öl bringt.

Es ist bekannt, dass spezielle offenzellige Polyurethanschwämme geeignet sind, hydrophobe Flüssigkeiten zu adsorbieren. So werden beispielsweise in "die Angewandte Makromolekulare Chemie", 78 (1979) Seiten 67 bis 74, die Verwendung von Polyurethanschaumstoffen als Filtermaterialien zur Abtrennung von hydrophoben Flüssigkeiten aus Mischungen von hydrophoben- und hydrophilen Flüssigkeiten beschrieben. Dabei offenbart dieser Artikel, dass sogar in den Zellen des Schaumstoffs enthaltenes Wasser selektiv von der hydrophoben Flüssigkeit verdrängt werden kann. Eine wesentliche Rolle für das Adsorptions- oder Absorptionsvermögen des Polyurethanschaumstoffs spielt dabei, die Hydrophobie der Oberfläche des Polyurethans. Diese kann beispielsweise durch Einbau von Monomeren mit langen Kohlenwasserstoffresten in das Polyurethangerüst erreicht werden.

DE 2738268 beschreibt Polyurethanschaumstoffe zur Adsorption von Öl, die durch Zugabe von lipophilen Verbindungen, beispielsweise Fettsäuren, zu den üblichen Aufbaukomponenten des Polyurethans erhalten werden. In den Beispielen werden als lipophile Komponente 43,3 Gewichtsteile, bezogen auf die Polyolkomponente eines Umsetzungsprodukts aus Ölsäure und Diethanolamin eingesetzt.

Ein wesentliches Problem bekannter hydrophober Polyurethanschaumstoffe ist ihre schlechte mechanische Stabilität. Solche Schaumstoffe können daher nur als Einsatzmaterialien in Filtern eingesetzt werden. Der Einsatz bei der Reinigung von Gewässern, wie Flüssen, Seen oder teilen von Meeren ist nicht möglich, da die erforderliche mechanische Stabilität nicht gegeben ist. So führt Wellengang zu Zerbrechen des Schaumstoffs und die zu geringe Rückprallelastizität in Kombination mit der zu niedrigen Stauchhärte zum ungewollten Wiederabgeben des Öls - bereits bei geringen Beanspruchungen, wie dem Herausziehen des Schaums aus dem Gewässer. Auch führt die Feinzelligkeit der bekannten Schaumstoffe dazu, dass nur Öle mit geringer Viskosität aufgenommen werden.

Problematisch ist aber auch, dass das Polyurethanmaterial häufig vom Öl angegriffen wird, wie beispielsweise das Aufquellen des Materials, sodass dadurch die mechanischen Eigenschaften drastisch verschlechtert werden.

WO 2008043545 beschreibt einen ölabsorbierenden Polyurethanschaumstoff, der Erhalten wird durch Verwendung eines Polyesters auf Basis einer difunktionellen Fettsäure als gegenüber Isocyanaten reaktive Verbindung. Dabei wird ein Schaum erhalten, der eine gewisse mechanische Stabilität zeigt und nicht bereits von Wellengang zerstört wird. Auch weist dieser Schaumstoff vorzugsweise eine durchschnittliche Zellgröße von ca. 1 mm auf, wodurch auch bereits höherviskose Öle aufgenommen werden können. Dennoch ist die mechanische Stabilität, insbesondere die Rückprallelastizität, die Zugfestigkeit und die Weiterreißfestigkeit des Polyurethanschaumstoffs für Anwendungen in offenen Gewässern, wie Flüssen, Seen und Meeren noch verbesserungswürdig.

WO 2005074583 offenbart einen öladsorbierenden Polyurethanschaumstoff, dessen Oberfläche mit einem hydrophoben Polyurethanmaterial beschichtet wird. Dieses Verfahren ermöglicht es zwar, beliebige Polyurethanschaumstoffe mit bekannten mechanischen Eigenschaften zur Öladsorption einzusetzen, allerdings ist die Herstellung durch den zusätzlichen Beschichtungsschritt aufwendig und teuer.

Aufgabe der vorliegenden Erfindung war es daher, ein Verfahren zur Aufnahme von hydrophoben Flüssigkeiten zu liefern, das die genannten Nachteile nicht aufweist.

Die Erfindungsgemäße Aufgabe konnte gelöst werden durch ein Verfahren, bei dem man einen ölaufnehmenden Polyurethanschaumstoff, der hervorragende mechanische Eigenschaften aufweist, mit der hydrophoben Flüssigkeit in Kontakt bringt.

Dabei weist der erfindungsgemäße Polyurethanschaumstoff eine Dichte von 70 bis 300 g/dm$^3$, 1 bis 20 Zellen pro cm, eine Rückprallelastizität größer 30 %, eine Bruchdehnung von größer 200 %, eine Weiterreißfestigkeit von größer 1,2 N/mm, eine Stauchhärte von größer 4 kPa und eine Zugfestigkeit von größer 200 kPa auf. Weiter weist der erfindungsgemäße Polyurethanschaumstoff eine Offenzelligkeit nach DIN ISO 4590 von mindestens 50 %, bevorzugt von 70 % bis 99,9 %, besonders bevorzugt von 85 % bis 99 % und insbesondere von 90 bis 98 % auf. Solche Polyurethanschaumstoffe sind in WO 2009/112576 beschrieben. Dabei wird die Ölaufnahmefähigkeit durch hydrophobe Gruppen verbessert. Diese hydrophoben Gruppen können entweder nachträglich in Form einer Beschichtung auf den Schaum aufgebracht werden oder sind vorzugsweise bereits in einer Komponente zur Herstellung des Polyurethans enthalten.

Die erfindungsgemäßen Polyurethanschaumstoffe können nach unterschiedlichen Verfahren hergestellt werden. Solche Verfahren sind in WO 2009/112576 beschrieben. Diese Schaumstoffe können optional nach im Stand der Technik bekannten Verfahren nachträglich hydrophobisiert werden. Ein Verfahren zur Aufbringung einer hydrophoben Beschichtung ist beispielsweise in WO 2005/074583 beschrieben. Vorzugsweise weist das Polyurethan der erfindungsgemäßen Polyurethanschaumstoffe ohne weitere Behandlung eine ausreichende Hydrophobie zur Ölaufnahme auf. Dies wird beispielsweise erreicht, wenn die Komponenten zur Herstellung des Polyurethans mindestens eine hydrophobe Gruppe, beispielsweise einen aliphatischen, araliphatischen, cycloaliphatischen oder aromatischen Kohlenwasserstoffrest mit mindestens 8 Kohlenstoffatomen, enthält. Verfahren zur Herstellung von erfindungsgemäßen Polyurethanschaumstoffen, die ohne weitere Behandlung eine ausreichende Hydrophobie zur Ölaufnahme aufweisen, werden durch die im Folgenden beschriebenen Ausführungsformen beschrieben.

In einer ersten Ausführungsform werden die erfindungsgemäßen offenzelligen Polyurethanschaumstoffe durch ein Verfahren erhalten, bei dem man a) Isocyanatgruppen aufweisende Verbindungen auf Basis von a1) MDI und gegebenenfalls a2) Polyetherolen und/oder a3) Polyesterolen, wobei der Gehalt an MDI mit einer Funktionalität von größer 2 kleiner als 30 Gew.-%, bezogen auf das Gesamtgewicht des MDI's a1) ist, b) höhermolekularen Verbindungen mit gegenüber Isocyanat reaktiven Gruppen, enthaltend Polyetherole und / oder Polyesterole, c) Treibmittel, enthaltend Wasser sowie gegebenenfalls d) Kettenverlängerer, e) Katalysator sowie f) sonstige Hilfsmittel und/oder Zusatzstoffe zu einer Reaktionsmischung vermischt und zu dem Polyurethanschaumstoff ausreagieren lässt, wobei als höhermolekulare Verbindung b) eine Mischung, enthaltend Polyesterpolyol und hydrophober, hyperverzweigter Polyester, eingesetzt wird.

In einer zweiten Ausführungsform werden die erfindungsgemäßen offenzelligen Polyurethanschaumstoffe durch ein Verfahren erhalten, bei dem man a) Isocyanatgruppen aufweisende Verbindungen auf Basis von a1) MDI und gegebenenfalls a2) Polyetherolen und/oder a3) Polyesterolen, wobei der Gehalt an MDI mit einer Funktionalität von größer 2 kleiner als 30 Gew.-%, bezogen auf das Gesamtgewicht des MDI's a1) ist, b) höhermolekularen Verbindungen mit gegenüber Isocyanat reaktiven Gruppen, enthaltend Polyetherole und/oder Polyesterole, c) Treibmittel, enthaltend Wasser sowie gegebenenfalls d) Kettenverlängerer, e) Katalysator sowie f) sonstige Hilfsmittel und/oder Zusatzstoffe zu einer Reaktionsmischung vermischt und zu dem Polyurethanschaumstoff ausreagieren lässt, wobei als höhermolekulare Verbindung b) eine Mischung, enthaltend Polyesterpolyol und hydrophobes, hyperverzweigtes Polycarbonat, eingesetzt wird.

Die zur Herstellung der erfindungsgemäßen Polyurethanschaumstoffe verwendeten Isocyanatgruppen aufweisenden Verbindungen umfassen Verbindungen auf Basis von a1) Diphenylmethandiisocyanat (im Folgenden als MDI bezeichnet), wobei der Gehalt an MDI mit einer Funktionalität von größer 2 kleiner als 30 Gew.-%, vorzugsweise kleiner als 20 Gew.-% und insbesondere kleiner als 10 Gew.-%, bezogen auf das Gesamtgewicht des MDIs ist. Beispiele sind 4,4'-Diphenylmethandiisocyanat, 2,4'-Diphenylmethandiisocyanat, und die Mischungen aus monomeren Diphenylmethandiisocyanaten und höherkernigen Homologen des Diphenylmethandiisocyanats (Polymer-MDI). Bevorzugt wird 4,4'-MDI verwendet. Das bevorzugt verwendete 4,4'-MDI kann 0 bis 20 Gew.-% 2,4'-MDI und geringe Mengen, bis etwa 10 Gew.-%, Allophanat-, Carbodiimid- oder Uretonimin-modifiziertes MDI enthalten. Es können auch geringe Mengen Polyphenylenpolymethylenpolyisocyanat (Polymer-MDI) eingesetzt werden. Neben MDI können gegebenenfalls auch weitere Isocyanate, wie Toluylendiisocyanat, Isophorondiisocyanat oder Hexamethylendiisocyanat in geringen Mengen enthalten sein. Vorzugsweise sind neben MDI und dessen Derivaten keine weiteren Isocyanate enthalten.

Die Isocyanatgruppen aufweisenden Verbindungen (a) werden bevorzugt in Form von Polyisocyanatprepolymeren eingesetzt. Diese Polyisocyanatprepolymere sind erhältlich, indem vorstehend beschriebenes MDI (a-1), beispielsweise bei Temperaturen von 30 bis 100 °C, bevorzugt bei etwa 80 °C, mit Polyetherolen (a2) und/oder Polyesterolen (a3), zum Prepolymer umgesetzt werden. Als Polyetherole (a2) und Polyesterole (a3) werden vorzugsweise die unter b) beschriebenen Polyetherole und Polyesterole eingesetzt. Dabei können neben Polyisocyanatprepolymeren auf Polyetherbasis sowie Polyisocyanatprepolymeren auf Polyesterbasis und deren Mischungen auch Polyisocyanatprepolymeren auf Basis von Polyethern und Polyestern sowie deren Mischungen mit den zuvor genannten Polyisocyanatprepolymeren eingesetzt werden. Bevorzugt werden als Isocyanatgruppen aufweisende Verbindung a) Polyisocyanatprepolymere auf Polyetherbasis sowie Mischungen von Polyisocyanatprepolymeren auf Polyetherbasis und Polyisocyanatprepolymeren auf Polyesterbasis eingesetzt. Der NCO-Gehalt der Prepolymere liegt dabei vorzugsweise im Bereich von 6 bis 30, besonders bevorzugt von 10 bis 28 und insbesondere von 13 bis 25 Gew.%.

Gegebenenfalls werden den genannten Polyolen bei der Herstellung der Isocyanatprepolymere übliche Kettenverlängerer (a4) zugegeben. Solche Substanzen sind im Folgenden unter d) beschrieben.

Vorzugsweise wird als Polyisocyanat a) eine Verbindung auf Basis von a1) MDI und a2) Polyesterol einsetzt. Besonders bevorzugt wird als Polyisocyanat a) eine Verbindung auf Basis von a1) MDI und a2) Polyetherol und eine Verbindung auf Basis von a1) MDI und a2) Polyesterol einsetzt. Dabei beträgt das Gewichtsverhältnis aus Verbindung auf Basis von a1) MDI und a2) Polyetherol und Verbindung auf Basis von a1) MDI und a3) Polyesterol vorzugsweise 35 : 65 bis 70 : 30.

Als höhermolekularen Verbindungen mit gegenüber Isocyanat reaktiven Gruppen, enthaltend Polyetherole und/oder Polyesterole b) können Verbindungen mit einem Molekulargewicht von größer 450 g/mol und gegenüber Isocyanaten reaktiven Gruppen eingesetzt werden. Vorzugsweise werden Polyetherole und/oder Polyesterole eingesetzt.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das meist 2 bis 3 reaktive Wasserstoffatome gebunden enthält, oder durch kationische Polymerisation mit Lewis-Säuren, wie Antimonpentachlorid oder Bortrifluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt weisen die Polyetherpolyole mindestens 75 % Propylenoxid auf. Wird das Polyetherpolyol zur Herstellung von Polyisocyanatprepolymeren eingesetzt wird vorzugsweise zur Herstellung der Polyetherpolyole ausschließlich Propylenoxid als Alkylenoxid eingesetzt.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von kleiner 4, vorzugsweise von 1,7 bis 3, besonders bevorzugt von 2 bis 2,7, und Molekulargewichte von 450 bis 12.000, bevorzugt von 500 bis 12.000, besonders bevorzugt von 700 bis 8.000 g/mol und insbesondere von 900 bis 3.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, Tripropylenglycol, 1,4-Butandiol, 1,5-Pentandiol, 3,3-Dimethyl-pentan-1,5-diol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure. Vorzugsweise verwendet werden Ethandiol, Diethylenglycol 1,4-Butandiol, 1,5 Pentandiol und/oder 1,6 Hexandiol.

Besonders bevorzugt werden Polyesterole unter Verwendung von Adipinsäure, einem Diol, ausgewählt aus Monoethylenglykol, Diethylenglykol, Butandiol und deren Gemischen, und optional Glycerin und/oder Trimethylolpropan hergestellt, wobei die molare Menge der Diole diejenige der Triole überwiegt.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert. Gegebenenfalls können als Kettenstopper auch übliche Monosäuren bei der Kondensation zugesetzt werden. Die erhaltenen Polyesterpolyole besitzen vorzugsweise eine Funktionalität von 1,8 bis 4, insbesondere von 2 bis 3, und ein Molekulargewicht von 480 bis 3000, vorzugsweise 1000 bis 3000 g/mol.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, Acrylnitril und Styrol, insbesondere bevorzugt Styrol im Überschuß verwendet. Die Monomere werden gegebenenfalls in Gegenwart weiterer Monomere, eines Makromers, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Die höhermolekulare Verbindungen b) können auch Harnstoff und seine Polymerderivate in dispergierter Form enthalten.

Vorzugsweise wird als höhermolekulare Verbindung b) neben hyperverzweigten Polyersterolen oder hyperverzweigtem Polycarbonat überwiegend, besonders bevorzugt ausschließlich ein oder mehrere Polyesterole eingesetzt werden.

Die mittlere Funktionalität der Verbindungen a2), a3) und b) ist kleiner als 2,4, bevorzugt kleiner als 2,3 und besonders bevorzugt 1,7 bis 2,2.

Ferner sind bei der Herstellung von Polyurethanschaumstoffen Treibmittel (c), enthaltend Wasser zugegen. Als Treibmittel (c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel.

Dabei wird Treibmittel in solchen Mengen eingesetzt, dass die Dichte des erfindungsgemäßen Polyurethanschaumstoffs 70 bis 300 $g/dm^3$ beträgt. Wird Wasser als alleiniges Treibmittel eingesetzt, ist der Gehalt an Wasser üblicherweise in einem Bereich von 0,4 bis 2 Gew.-%, bevorzugt 0,6 bis 1,8 Gew.-%, besonders bevorzugt 0,8 bis 1,5 Gew.-%, bezogen auf das Gesamtgewicht der Komponenten (b) bis (f).

Als Kettenverlängerungsmittel (d) werden Substanzen mit einem Molekulargewicht von vorzugsweise kleiner 450 g/mol, besonders bevorzugt von 60 bis 400 g/mol eingesetzt, wobei Kettenverlängerer 2 gegenüber Isocyanaten reaktive Wasserstoffatome aufweisen. Diese können einzeln oder bevorzugt in Form von Mischungen eingesetzt werden. Vorzugsweise werden Diole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, Pentandiol, Tripropylenglycol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, und niedermolekulare hydroxylgruppenhaltige Polyalkylenoxide auf Basis Ethylen- und/oder 1,2-Propylenoxid und den vorgenannten Diolen als Startermoleküle. Besonders bevorzugt werden als Kettenverlängerer (d) Monoethylenglycol, 1,4-Butandiol, oder Mischungen davon eingesetzt.

Gegebenenfalls können neben Kettenverlängerungsmitteln auch Vernetzungsmittel eingesetzt werden. Dabei handelt es sich um Substanzen mit einem Molekulargewicht von kleiner 450 g/mol und 3 gegenüber Isocyanat reaktive Wasserstoffatome, beispielsweise um Triole, wie 1,2,4-, 1,3,5-Trihydroxy-cyclohexan, Glycerin und Trimethylolpropan oder niedermolekulare hydroxylgruppenhaltige Polyalkylenoxide auf Basis von Ethylen- und/oder 1,2-Propylenoxid und den vorgenannten Triolen als Startermoleküle. Vorzugsweise werden in der zweiten bis fünften Ausführungsform keine Vernetzungsmittel eingesetzt.

Sofern Kettenverlängerungsmittel (d) Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) bis (f), zum Einsatz.

Als Katalysatoren (e) zur Herstellung der Polyurethanschaumstoffe werden bevorzugt Verbindungen verwendet, welche die Reaktion der Hydroxylgruppen enthaltenden Verbindungen der Komponente (b), (c) und gegebenenfalls (d) mit den Isocyanatgruppen aufweisenden Verbindungen (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Harnstoff, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethyl-hexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Der Reaktionsmischung zur Herstellung der Polyurethanschäume können gegebenenfalls auch noch Hilfsmittel und/oder Zusatzstoffe (f) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie vulkanisches Gerstein, silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), zugegeben.

Dabei ist es erfindungswesentlich, dass für die jeweiligen Ausführungsformen des erfindungsgemäßen Verfahrens bestimmte Bedingungen eingehalten werden.

So werden in der ersten Ausführungsform als höhermolekulare Verbindung b) eine Mischung enthaltend ein Polyesterpolyol und einem hydrophoben, hyperverzweigten Polyester eingesetzt. Vorzugsweise wird als höhermolekulare Verbindung b) eine Mischung bestehend aus Polyesterpolyol und einem hydrophoben, hyperverzweigten Polyester eingesetzt, als Polyesterol können dabei alle oben beschriebenen Polyesterole eingesetzt werden. Ein erfindungsgemäßer hyperverzweigter Polyester ist erhältlich durch Umsetzung mindestens einer Dicarbonsäure ($A_2$) oder von Derivaten derselben mit

s1) mindestens einem mindestens dreiwertigen Alkohol ($B_3$), oder

t1) mit mindestens einem zweiwertigen Alkohol ($B_2$) und mindestens einem x-wertigen Alkohol ($C_x$), der mehr als zwei OH-Gruppen aufweist, wobei x eine Zahl größer 2 ist, wobei die Gesamtmischung der eingesetzten Alkohole eine mittlere Funktionalität von 2,1 bis 10 aufweist,

oder durch Umsetzung mindestens einer Polycarbonsäure ($D_y$) oder deren Derivat, die mehr als zwei Säuregruppen aufweist, wobei y eine Zahl größer 2, mit

s2) mindestens einem mindestens zweiwertigen Alkohol ($B_2$), oder

t2) mit mindestens einem zweiwertigen Alkohol ($B_2$) und mindestens einem x-wertigen Alkohol ($C_x$), der mehr als zwei OH-Gruppen aufweist, wobei x eine Zahl größer 2 ist,

wobei

u) bis zu 50 mol-%, bevorzugt bis zu 40 mol-%, besonders bevorzugt bis zu 30 mol-%, und insbesondere bevorzugt bis zu 20 mol-% bezogen auf die gemäß s1), s2), t1) und t2) umgesetzten Alkohole $B_3$, $B_2$ und/oder $C_x$, eines hydrophoben langkettigen monofunktionellen Alkohols $E_1$ mit mindestens 8 C-Atomen mit umgesetzt werden können, und

v) optional anschließender Umsetzung mit einer langkettigen hydrophoben Monocarbonsäure mit mindestens 8 C-Atomen,

wobei eine oder mehrere der nachstehenden Bedingungen erfüllt sind:

i) der Alkohol $B_3$ bzw. $B_2$ und/oder $C_x$ ist ein hydrophobes Alkoxylat auf Basis von Propylenoxid, Butylenoxid oder Styroloxid mit im Mittel mindestens 1 und höchstens 100 Oxyalkylen-Einheiten pro Startermolekül, und einem difunktionellen (für $B_2$), trifunktionellen (für $B_3$) oder x-funktionellen (für $C_x$) Startermolekül;

ii) die Alkohole $B_3$ bzw. $B_2$ und/oder $C_x$ enthalten mindestens 20 mol.-%, bevorzugt mindestens 30 mol-%, besonders bevorzugt mindestens 40 mol-%, und ganz besonders bevorzugt mindestens 50 mol-% eines langkettigen Diols bzw. Polyols mit mindestens 8 C-Atomen;

iii) die Dicarbonsäure ist eine hydrophobe langkettige aliphatische Dicarbonsäure, eine aromatische oder cycloaliphatische Dicarbonsäure mit mindestens 8 C-Atomen, bzw. die Carbonsäure $D_y$ mit mehr als zwei Säuregruppen ist eine hydrophobe langkettige aliphatische Polycarbonsäure, eine aromatische oder cycloaliphatische Polycarbonsäure mit mindestens 9 C-Atomen;

iv) mindestens 10 mol-% und höchstens 90 mol.-%, bevorzugt höchstens 70 mol-%, besonders bevorzugt höchstens 50 mol-%, und insbesondere bevorzugt höchstens 30 mol-% bezogen auf die gemäß s1), s2), t1) und t2) umgesetzten Alkohole $B_3$, $B_2$ und/oder $C_x$ eines langkettigen Monoalkohols mit mindestens 8 C-Atomen werden mit umgesetzt;

v) es wird anschließend mit 10 bis 100 mol.-%, bevorzugt 10 bis 80 mol-%, besonders bevorzugt 20 bis 80 mol-%, insbesondere bevorzugt 20 bis 60 mol-% bezogen auf die mittlere Anzahl der OH-Gruppen des hyperverzweigten Polyesters, einer langkettigen hydrophoben Monocarbonsäure mit mindestens 8 C-Atomen umgesetzt.

Unter "hyperverzweigt" wird im Zusammenhang mit der vorliegenden Erfindung verstanden, dass der Verzweigungsgrad (Degree of Branching, DB), von 10 bis 100 % vorzugsweise 10 bis 99,9 %, besonders bevorzugt 20 bis 99 %, insbesondere 20 bis 95 % beträgt. Damit wird auch ein Dendrimer mit einem Verzweigungsgrad von 100% umfasst. Zur Definition des "Degree of Branching" siehe H. Frey et al., Acta Polym. 1997,48,30.

Unter einem Polyester des Typs $A_xB_y$ versteht man ein Kondensat der Moleküle A und B, wobei die Moleküle A funktionelle Gruppen funkt1) und die Moleküle B funktionelle Gruppen funkt2) aufweisen, die in der Lage sind, miteinander zu kondensieren. Dabei ist die Funktionalität der Moleküle A gleich x und die Funktionalität der Moleküle B gleich y. Beispielsweise sei ein Polyester aus Adipinsäure als Molekül A (funkt1 = COOH, x = 2) und Glycerin als Molekül B (funkt2 = OH; y = 3) genannt.

Selbstverständlich können als Einheiten A bzw. B auch Mischungen von verschiedenen Molekülen A mit gleicher funktioneller Gruppe und gleichen und/oder unterschiedlichen Funktionalitäten und verschiedenen Molekülen B mit gleicher funktioneller Gruppe und gleichen und/oder unterschiedlichen Funktionalitäten eingesetzt werden. Die Funktionalitäten x und y der Mischung ergeben sich dann durch Mittelung.

Im Allgemeinen wird das Verhältnis der reaktiven Gruppen im Reaktionsgemisch so gewählt, dass sich ein molares Verhältnis von OH-Gruppen zu Carboxylgruppen oder deren Derivaten von 5 : 1 bis 1 : 5, vorzugsweise von 4 : 1 bis 1 : 4, besonders bevorzugt von 3 : 1 bis 1 : 3, besonders bevorzugt von 2,8 : 1 bis 1 : 2,8, und ganz besonders bevorzugt von 2,5 : 1 bis 1 : 2,5 einstellt.

In einer weiteren besonders bevorzugten Ausführung wird im Reaktionsgemisch eine der beiden Komponenten, die zur Synthese des hyperverzweigten Polymers verwendete Carbonsäure-Komponente oder die Alkohol-Komponente, im molaren Überschuss eingesetzt. Dadurch werden besonders bevorzugte, überwiegend COOH-terminierte bzw. überwiegend OH-terminierte hyperverzweigte Polyester gebildet. Hierbei haben sich molare Überschuss-Verhältnisse der COOH-Gruppen in Bezug auf die OH-Gruppen bzw. Überschüsse der OH-Gruppen in Bezug auf die COOH-Gruppen von 1,1 : 1 bis 3 : 1, bevorzugt von 1,3 : 1 bis 2,8 : 1, bevorzugt von 1,5 : 1 bis 2,6 : 1, besonders bevorzugt von 1,7 : 1 bis 2,4 : 1, ganz bevorzugt von 1,8 : 1 bis 2,4 : 1, und insbesondere bevorzugt von 1,9 : 1 bis 2,4 : 1 als vorteilhaft erwiesen.

Gegebenenfalls wird in Gegenwart eines Lösemittels und optional in Gegenwart eines anorganischen, metallorganischen oder niedermolekularen organischen Katalysators oder eines Enzyms gearbeitet. Die Umsetzung in Substanz, also ohne Lösungsmittel, ist das kostengünstigste und damit bevorzugte Herstellungsverfahren. Als Katalysatoren werden dem Fachmann bekannte, für die Veresterungsreaktion übliche Katalysatoren verwendet, wie sie zum Beispiel in der WO 2008/071622 beschrieben sind.

Hyperverzweigte Polyester im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Geeignete hydrophobe langkettige Dicarbonsäuren mit 8 oder mehr C-Atomen sind beispielsweise Korksäure (Octandisäure), Azelainsäure, Sebacinsäure (Decandisäure), Dodecandisäure und Tetradecandisäure. Zu den langkettigen Dicarbonsäuren gehören insbesondere solche mit langkettigen Alkyl- oder Alkenylsubstituenten, beispielsweise Alkenylbernsteinsäure mit einem C8- bis C24-Alkenylrest, bevorzugt C12- bis C18-Alkenylrest.

Zu den langkettigen Dicarbonsäuren gehören insbesondere durch Addition von hydrophoben Resten an die C-C-Doppelbindung hydrophobierte α,β-ungesättigte Carbonsäuren oder deren Derivate. Als α,β-ungesättigte Carbonsäuren bzw. -derivate werden dabei vorzugsweise Maleinsäure, Maleinsäureanhydrid und Fumarsäure, besonders bevorzugt Maleinsäureanhydrid, eingesetzt. Die Hydrophobierung kann nach oder bevorzugt vor dem Umsetzen mit dem Alkohol zum Polyester erfolgen. Als Hydrophobierungsmittel können hydrophobe Verbindungen enthaltend mindestens eine C-C-Doppelbindung, wie lineare oder verzweigte Olefine, lineares oder verzweigtes Polyisobutylen, Polybutadien, Polyisopren mit im Mittel jeweils 8 bis 160 C-Atomen eingesetzt werden.

Zu den langkettigen Dicarbonsäuren gehören auch ungesättigte Fettsäuren oder deren Derivate sowie dimerisierte Fettsäuren (z.B. über die olefinische Einheit dimerisierte Ölsäure).

Geeignete cycloaliphatische Dicarbonsäuren sind beispielsweise cis- und trans-Cyclohexan-1,2-dicarbonsäure, cis- und trans-Cyclohexan-1,3-dicarbonsäure, cis- und trans-Cyclohexan-1,4-dicarbonsäure, wobei die oben genannten Dicarbonsäuren substituiert sein können.

Geeignete aromatische Dicarbonsäuren sind beispielsweise Phthalsäure, Isophthalsäure und Terephthalsäure.

Weiterhin lassen sich Gemische von zwei oder mehreren der vorgenannten Vertreter einsetzen.

Die Dicarbonsäuren lassen sich entweder als solche oder in Form ihrer Derivate einsetzen.

Unter Derivaten werden bevorzugt verstanden

- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.

Es ist auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Umsetzbare Tricarbonsäuren oder Polycarbonsäuren ($D_y$) sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren.

Tricarbonsäuren oder Polycarbonsäuren ($D_y$) lassen sich entweder als solche oder aber in Form von Derivaten einsetzen.

Es ist auch möglich, ein Gemisch aus einer Tri- oder Polycarbonsäure und einem oder mehreren ihrer Derivate einzusetzen, zum Beispiel eine Mischung aus Pyromellitsäure und Pyromellitsäuredianhydrid. Gleichfalls ist es möglich, ein Gemisch mehrerer verschiedener Derivate von einer oder mehreren Tri- oder Polycarbonsäuren einzusetzen, zum Beispiel eine Mischung aus 1,3,5-Cyclohexantricarbonsäure und Pyromellitsäuredianhydrid.

Tricarbonsäuren oder Polycarbonsäuren lassen sich in der erfindungsgemäßen Reaktion entweder als solche oder aber in Form von Derivaten einsetzen.

Es ist auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um den hyperverzweigten Polyester zu erhalten.

Als Diole ($B_2$) verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3-und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H, wobei n eine ganze Zahl und $n \geq 4$ ist, Polyethylenpolypropylenglykole, wobei die Abfolge der Ethylenoxid- und der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Dabei kann eine oder auch beide Hydroxylgruppen in den vorstehend genannten Diolen durch SH-Gruppen substituiert werden. Bevorzugt eingesetzte Diole sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H, wobei n eine ganze Zahl und $n \geq 4$ ist, Polyethylen-polypropylenglykole, wobei die Abfolge der Ethylenoxid- und der Propylenoxid-Einheiten blockweise oder statistisch sein kann, oder Polytetramethylenglykole, vorzugsweise bis zu einem Molgewicht bis zu 5000 g/mol.

Die zweiwertigen Alkohole $B_2$ können optional noch weitere Funktionalitäten wie beispielsweise Carbonyl-, Carboxy-, Alkoxycarbonyl- oder Sulfonyl-Funktionen enthalten, wie beispielsweise Dimethylolpropionsäure und Dimethylolbuttersäure, sowie deren $C_1$-$C_4$-Alkylester, Glycerinmonostearat und Glycerinmonooleat.

Geeignete langkettige Diole $B_2$ mit mindestens 8 C-Atomen sind beispielsweise 1,8-Octandiol, 1,2-Octandiol, 1,9-Nonandiol, 1,2-Decandiol, 1,10-Decandiol, 1,2-Dodecandiol, 1,12-Dodecandiol, sowie Monofettsäureester von Triolen, insbesondere Monofettsäureester von Glycerin, wie Glycerinmonostearat, Glycerinmonooleat und Glycerinmonopalmitat.

Mindestens trifunktionelle Alkohole ($B_3$ bzw. $C_x$) umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zucker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Propylenoxid und/oder Butylenoxid.

Dabei sind Glycerin, Diglycerin, Triglycerin, Trimethylolethan, Trimethylolpropan, Bis(trimethyolopropan), 1,2,4-Butantriol, Pentaerythrit, Di(pentaerythrit), Tris(hydroxyethyl)isocyanurat sowie deren Polyetherole auf Basis von Propylenoxid besonders bevorzugt.

Die mindestens trifunktionellen Alkohole $B_3$ können optional noch weitere Funktionalitäten wie beispielsweise Carbonyl-, Carboxy-, Alkoxycarbonyl- oder Sulfonyl-Funktionen enthalten, wie beispielsweise Gallussäure oder ihre Derivate.

Geeignete hydrophobe langkettige aliphatische Monocarbonsäuren F sind beispielsweise Octansäure, Decansäure, Dodecansäure, Tetradecansäure und Fettsäuren, wie Stearinsäure, Ölsäure, Laurinsäure, Palmitinsäure, Linolsäure und Linolensäure.

In einer Ausführungsform i) der Erfindung ist der Alkohol $B_3$ bzw. $B_2$ und/oder $C_x$ ein hydrophobes Alkoxylat auf Basis von Propylenoxid oder Butylenoxid mit im Mittel mindestens 1 und höchstens 100 Oxyalkylen-Einheiten pro Startermolekül, bevorzugt höchstens 50 Oxyalkylen-Einheiten pro Startermolekül. Bevorzugte Alkohole $B_3$ bzw. $B_2$ und/oder $C_x$ sind die Propoxylate von Monoethylenglycol, Diethylenglycol, Propylenglycol, Dipropylenglycol, Tripropylenglycol, Glycerin, Trimethylolpropan, Pentaerythrit, Sorbitol, Saccharose, die im Mittel 1 bis 30 Oxypropylen-Einheiten pro OH-Gruppe aufweisen, insbesondere 1 bis 20 Oxypropylen-Einheiten pro OH-Gruppe aufweisen.

In einer weiteren Ausführungsform ii) der Erfindung enthalten die Alkohole $B_3$ bzw. $B_2$ und/oder $C_x$ mindestens 20 mol.-%, bevorzugt mindestens 30 mol.-%, insbesondere 40 mol-% und ganz insbesondere mindestens 50 mol-% eines langkettigen Diols bzw. Polyols mit mindestens 8 C-Atomen, bevorzugt mit mindestens 10 C-Atomen, besonders bevorzugt mit mindestens 12 C-Atomen. Besonders bevorzugte Diole bzw. Polyole mit mindestens 8 C-Atomen sind Isomere des Octandiols, des Nonadiols, des Decandiols, des Dodecandiols, des Tetradecandiols, des Hexadecandiols, des Octadecandiols, des Dimethyolcyclohexans und des Dimethylolbenzols.

In einer weiteren Ausführungsform iii) der Erfindung ist die Dicarbonsäure eine hydrophobe langkettige aliphatische Dicarbonsäure, eine aromatische oder cycloaliphatische Dicarbonsäure mit mindestens 8 C-Atomen. Bevorzugt werden aliphatische langkettige Dicarbonsäuren umgesetzt. Diese weisen bevorzugt mindestens 10, insbesondere mindestens 12 C-Atome auf. Im Allgemeinen weisen sie höchstens 100 C-Atome, bevorzugt höchstens 50 C-Atome auf. Daneben können kürzerkettige Dicarbonsäuren in Mengen bis zu 90 mol-%, bevorzugt in Mengen bis zu 70 mol-%, besonders bevorzugt bis zu 50 mol-%, bezogen auf die Gesamtmenge der Dicarbonsäuren, mit eingesetzt werden.

Bevorzugte langkettige aliphatische Dicarbonsäuren sind Korksäure (Octandisäure), Azelainsäure, Sebacinsäure (Decandisäure), Dodecandisäure und Tetradecandisäure; Alkenylbernsteinsäure, insbesondere mit einem C8- bis C24-Alkenylrest, bevorzugt solche mit einem C12- bis C18-Alkenylrest und insbesondere bevorzugt mit einem C16- bis C18-Alkenylrest, wobei die geradzahligen Alkenylreste gegenüber ungeradzahligen Alkenylresten nochmals weiter bevorzugt sind; Addukte von linearem oder verzweigtem Polyisobutylen, Polybutadien, Polyisopren mit im Mittel 8 bis 160 C-Atomen an $\alpha,\beta$-ungesättigte Carbonsäuren, insbesondere Maleinsäure oder Fumarsäure; Fettsäuren oder deren Derivate und dimerisierte Fettsäuren.

Als Polycarbonsäure $D_y$ mit mehr als zwei Säuregruppen sind hydrophobe langkettige sowie zyklische, aliphatische und aromatische Polycarbonsäuren bevorzugt. Besonders bevorzugt sind Aconitsäure, sowie Isomere der Cyclohexantricarbonsäure, der Benzoltricarbonsäure und oligomere Polyacrylsäuren mit mindestens 3 und höchstens 10 Säuregruppen.

In einer weiteren Ausführungsform iv) der Erfindung werden mindestens 10 mol-% und höchstens 90 mol.-%, bevorzugt höchstens 70 mol-%, besonders bevorzugt höchstens 50 mol-%, und insbesondere bevorzugt höchstens 30 mol-% bezogen auf die gemäß s1), s2), t1) und t2) umgesetzten Alkohole $B_3$, $B_2$ und/oder $C_x$ eines langkettigen Monoalkohols mit mindestens 8 C-Atomen, bevorzugt mindestens 10 C-Atomen mit umgesetzt. Bevorzugte langkettige Monoalkohole sind Octanol, Decanol, Dodecanol, Tetradecanol, C16-Alkohole und C18-Alkohole.

In einer weiteren Ausführungsform v) der Erfindung wird das aus den Komponenten s1) und t1) bzw. s2) und t2) erhaltene Umsetzungsprodukt anschließend mit 10 bis 100 mol-%, bevorzugt 20 bis 100 mol-%, besonders bevorzugt 20 bis 80 mol-%, insbesondere bevorzugt 20 bis 60 mol-% bezogen auf die mittlere Anzahl der OH-Gruppen des hyperverzweigten Polyesters, einer langkettigen hydrophoben Monocarbonsäure mit mindestens 8 C-Atomen, bevorzugt mindestens 10 C-Atomen, insbesondere mit mindestens 12 C-Atomen umgesetzt. Bevorzugte langkettige Monocarbonsäuren sind Octansäure, Decansäure, Dodecansäure, Tetradecansäure und Fettsäuren, wie Stearinsäure und Ölsäure.

Insbesondere bevorzugte hydrophobe hyperverzweigte Polyester werden erhalten, wenn

i) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

iii) dieser mit einer hydrophoben langkettigen aliphatischen Dicarbonsäure, einer aromatischen oder cycloaliphatischen Dicarbonsäure mit mindestens 8 C-Atomen, insbesondere einer langkettigen aliphatischen Dicarbonsäure mit mindestens 8 C-Atomen, oder mit einer hydrophoben langkettigen aliphatischen Polycarbonsäure, einer aromatischen oder cycloaliphatischen Polycarbonsäure $D_y$ mit mehr als zwei Säuregruppen und mindestens 9 C-Atomen umgesetzt wird,

oder

i) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

iii) dieser mit einer hydrophoben langkettigen aliphatischen Dicarbonsäure, einer aromatischen oder cycloaliphatischen Dicarbonsäure mit mindestens 8 C-Atomen, insbesondere einer langkettigen aliphatischen Dicarbonsäure mit mindestens 8 C-Atomen, oder mit einer hydrophoben langkettigen aliphatischen Polycarbonsäure, einer aromatischen oder cycloaliphatischen Polycarbonsäure $D_y$ mit mehr als zwei Säuregruppen und mindestens 9 C-Atomen umgesetzt wird,

wobei eine der beiden Komponenten, die Carbonsäure- oder die Alkohol-Komponente, im Reaktionsgemisch zur Synthese des hyperverzweigten Polyesters im molaren Überschuss eingesetzt wird und das molare Überschuss-Verhältnis der COOH-Gruppen in Bezug auf die OH-Gruppen bzw. der Überschuss der OH-Gruppen in Bezug auf die COOH-Gruppen von 1,1 : 1 bis 3 : 1, bevorzugt von 1,3 : 1 bis 2,8 : 1, bevorzugt von 1,5 : 1 bis 2,6 : 1, besonders bevorzugt von 1,7 : 1 bis 2,4 : 1, ganz bevorzugt von 1,8 : 1 bis 2,4 : 1, und insbesondere bevorzugt 1,9 : 1 bis 2,4 : 1 beträgt, insbesondere die Carbonsäure-Komponente im molaren Überschuss eingesetzt wird und das molare Überschuss-Verhältnis der COOH-Gruppen in Bezug auf die OH-Gruppen von 1,1 : 1 bis 3 : 1, bevorzugt von 1,3 : 1 bis 2,8 : 1, bevorzugt von 1,5 : 1 bis 2,6 : 1, besonders bevorzugt von 1,7 : 1 bis 2,4 : 1, ganz bevorzugt von 1,8 : 1 bis 2,4 : 1, und insbesondere bevorzugt 1,9 : 1 bis 2,4 : 1 beträgt,
oder

i) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und
iv) mindestens 10 mol-% und höchstens 90 mol.-%, bevorzugt höchstens 70 mol-%, besonders bevorzugt höchstens 50 mol-%, und insbesondere bevorzugt höchstens 30 mol-%, bezogen auf die gemäß s1), s2), t1) und t2) umgesetzten Alkohole $B_3$, $B_2$ und/oder $C_x$ eines langkettigen Monoalkohols mit mindestens 8 C-Atomen mit umgesetzt werden,

oder

i) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

v) anschließend das Umsetzungsprodukt aus s1) und t1) bzw. s2) und t2) mit 10 bis 100 mol.-%, bevorzugt 20 bis 100 mol-%, besonders bevorzugt 20 bis 80 mol-%, insbesondere bevorzugt 20 bis 60 mol-% bezogen auf die mittlere Anzahl der OH-Gruppen des hyperverzweigten Polyesters, einer langkettigen hydrophoben Monocarbonsäure mit mindestens 8 C-Atomen umgesetzt wird.

Der erfindungsgemäß eingesetzte hydrophobe hyperverzweigte Polyester weist im Allgemeinen ein zahlenmittleres Molekulargewicht $M_n$ von 700 bis 15000 g/mol, vorzugsweise von 1000 bis 12000 g/mol und insbesondere von 1500 bis 10000 g/mol auf, gemessen mit GPC, kalibriert mit Polymethylmethacrylat (PMMA) Standard.
Im Allgemeinen weist der erfindungsgemäß eingesetzte hydrophobe hyperverzweigte Polyester eine OH-Zahl von 0 bis 500, vorzugsweise von 0 bis 400, insbesondere von 0 bis 300 mg KOH/g Polyester gemäß DIN 53240 auf.
Im Allgemeinen haben die erfindungsgemäß eingesetzten hydrophoben hyperverzweigten Polyester eine Säurezahl gemäß DIN 53240, Teil 2 von 0 bis 300, bevorzugt von 0 bis 200, bevorzugt von 1 bis 150, besonders bevorzugt von 1 bis 125, bevorzugt von 5 bis 125 und insbesondere von 10 bis 125 mg KOH/g.
Weiter haben die erfindungsgemäß eingesetzten hydrophoben hyperverzweigten Polyester im Allgemeinen eine Glasübergangstemperatur (gemessen nach der ASTM Methode D3418 - 03 mit DSC) von -60 bis 100 °C, bevorzugt von -40 bis 80 °C.
Die Herstellung der hydrophoben hyperverzweigten Polyester wird beispielsweise in WO 2009112576 beschrieben.
Der hydrophob hyperverzweigte Polyester wird im Allgemeinen in Mengen von 0,2 bis 40 Gew.-%, bevorzugt 1 bis 30 Gew.-%, besonders bevorzugt 2 bis 20 Gew.-% und insbesondere 2,5 bis 7,5 Gew.-%, bezogen auf die Summe aus höhermolekularer Verbindung b) und hydrophobem hyperverzweigtem Polyester eingesetzt. In der Regel ist bereits eine Menge von 3 Gew.-% hydrophobem hyperverzweigtem Polyester ausreichend, um die gewünschte Offenzelligkeit und Grobzelligkeit hervorzurufen und damit die sehr gute Weiterreißfestigkeit der Polyurethanschäume bereitzustellen.
In einer zweiten Ausführungsform wird als höhermolekulare Verbindung b) eine Mischung enthaltend Polyesterpolyol und einem hydrophoben, hyperverzweigten Polycarbonat eingesetzt. Vorzugsweise wird als höhermolekulare Verbindung b) eine Mischung bestehend aus Polyesterpolyol und einem hydrophoben, hyperverzweigten Polyester eingesetzt. Als Polyesterol können dabei alle unter b) beschriebenen Polyesterole eingesetzt werden. Ein erfindungsgemäßes hyperverzweigtes Polycarbonat ist erhältlich durch Umsetzung mindestens eines Kohlensäureesters($A_2$) oder von Derivaten desselben mit

l) mindestens einem mindestens dreiwertigen Alkohol ($B_3$), oder

m) mit mindestens einem zweiwertigen Alkohol ($B_2$) und mindestens einem x-wertigen Alkohol ($C_x$), der mehr als

zwei OH-Gruppen aufweist, wobei x eine Zahl größer 2 ist, wobei die Gesamtmischung der eingesetzten Alkohole eine mittlere Funktionalität von 2,1 bis 10 aufweist,

wobei

n) bis zu 50 Mol-%, bevorzugt bis zu 40 Mol-%, besonders bevorzugt bis zu 30 Mol-%, und insbesondere bevorzugt bis zu 20 Mol-% bezogen auf die gemäß a) und b) umgesetzten Alkohole $B_3$, $B_2$ und/oder $C_x$, eines hydrophoben langkettigen monofunktionellen Alkohols $E_1$ mit mindestens 8 C-Atomen mit umgesetzt werden können, und

o) optional anschließender Umsetzung mit einer langkettigen hydrophoben OH-reaktiven Verbindung F, wie einer Monocarbonsäure oder einem Monoisocyanat, mit mindestens 8 C-Atomen,

p) optional anschließender Umsetzung mit Propylenoxid und/oder Butylenoxid,

wobei eine oder mehrere der nachstehenden Bedingungen erfüllt sind:

I) der Alkohol $B_3$ bzw. $B_2$ und/oder $C_x$ ist ein hydrophobes Alkoxylat auf Basis von Propylenoxid, Butylenoxid oder Styroloxid mit im Mittel mindestens 1 und höchstens 100 Oxyalkylen-Einheiten pro Startermolekül, und einem difunktionellen (für $B_2$), trifunktionellen (für $B_3$) oder x-funktionellen (für $C_x$) Startermolekül;

II) die Alkohole $B_3$ bzw. $B_2$ und/oder $C_x$ enthalten mindestens 20 Mol-%, bevorzugt mindestens 30 Mol-%, besonders bevorzugt mindestens 40 Mol-%, und ganz besonders bevorzugt mindestens 50 Mol-% eines langkettigen Diols bzw. Polyols mit mindestens 8 C-Atomen;

III) mindestens 10 Mol-% und höchstens 90 Mol-%, bevorzugt höchstens 70 Mol-%, besonders bevorzugt höchstens 50 Mol-%, und insbesondere bevorzugt höchstens 30 Mol-% bezogen auf die gemäß I) und m) umgesetzten Alkohole $B_3$, $B_2$ und/oder $C_x$ eines langkettigen Monoalkohols mit mindestens 8 C-Atomen werden mit umgesetzt;

IV) es wird anschließend mit 10 bis 100 Mol-%, bevorzugt 10 bis 80 Mol-%, besonders bevorzugt 20 bis 80 Mol-%, insbesondere bevorzugt 20 bis 60 Mol-% bezogen auf die mittlere Anzahl der OH-Gruppen des hyperverzweigten Polycarbonats, der langkettigen hydrophoben OH-reaktiven Verbindung F mit mindestens 8 C-Atomen umgesetzt;

V) es wird anschließend mit, pro Äquivalent OH-Gruppen des hyperverzweigten Polycarbonats, 1 bis 60, bevorzugt mit 2 bis 50, besonders bevorzugt mit 3 bis 40 und insbesondere bevorzugt mit 3 bis 30 Äquivalenten Propylenoxid, Butylenoxid oder Propylenoxid und Butylenoxid umgesetzt.

Unter einem Polycarbonat des Typs $A_xB_y$ versteht man ein Kondensat der Moleküle A und B, wobei die Moleküle A funktionelle Gruppen funkt1) und die Moleküle B funktionelle Gruppen funkt2) aufweisen, die in der Lage sind, miteinander zu kondensieren. Dabei ist die Funktionalität der Moleküle A gleich x und die Funktionalität der Moleküle B gleich y. Beispielsweise sei ein Polycarbonat aus Diethylcarbonat als Molekül A (funkt1 = COOEt, x = 2) und propoxyliertem Glycerin als Molekül B (funkt2 = OH; y = 3) genannt. Hyperverzweigte Polycarbonate sind beispielsweise in der WO 2005/026234 beschrieben.

Selbstverständlich können als Einheiten A bzw. B auch Mischungen von verschiedenen Molekülen A mit gleicher funktioneller Gruppe und gleichen und/oder unterschiedlichen Funktionalitäten und verschiedenen Molekülen B mit gleicher funktioneller Gruppe und gleichen und/oder unterschiedlichen Funktionalitäten eingesetzt werden. Die Funktionalitäten x und y der Mischung ergeben sich dann durch Mittelung.

Geeignete hyperverzweigte Polycarbonate können beispielsweise hergestellt werden durch

1.) Umsetzung mindestens eines organischen Carbonats der allgemeinen Formel $R^aOC(=O)OR^b$ mit mindestens einem aliphatischen Alkohol ($B_3$ oder $C_x$), welcher mindestens 3 OH-Gruppen aufweist, unter Eliminierung von Alkoholen $R^aOH$ bzw. $R^bOH$ zu einem oder mehreren Kondensationsprodukten (K), wobei $R^a$ und $R^b$ jeweils unabhängig voneinander ausgewählt sind unter geradkettigen oder verzweigten Alkyl-, Arylalkyl-, Cycloalkyl- und Arylresten, wobei $R^a$ und $R^b$ auch gemeinsam mit der Gruppe -OC(=O)O-, an die sie gebunden sind, für ein cyclisches Carbonat stehen können, oder

2.) Umsetzung von Phosgen, Diphosgen oder Triphosgen mit dem unter 1.) genannten Alkohol ($B_3$ oder $C_x$) zum Kondensationsprodukt K unter Chlorwasserstoffeliminierung sowie

3.) intermolekulare Umsetzung der Kondensationsprodukte (K) zu einem hochfunktionellen, hyperverzweigten Polycarbonat,

wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Die Reste $R^a$ und $R^b$ können gleich oder verschieden sein. In einer speziellen Ausführung sind $R^a$ und $R^b$ gleich. Vorzugsweise sind $R^a$ und $R^b$ ausgewählt aus $C_1$-$C_{20}$-Alkyl, $C_5$-$C_7$-Cycloalkyl, $C_6$-$C_{10}$-Aryl und $C_6$-$C_{10}$-Aryl-$C_1$-$C_{20}$-alkyl, wie eingangs definiert. $R^a$ und $R^b$ können auch gemeinsam für $C_2$-$C_6$-Alkylen stehen. Besonders bevorzugt sind $R^a$ und $R^b$ ausgewählt aus geradkettigem und verzweigtem $C_1$-$C_5$-Alkyl, wie in der WO 2005/026234 beschrieben.

Dialkyl- oder Diarylcarbonate können z. B. hergestellt werden durch Reaktion von aliphatischen, araliphatischen oder aromatischen Alkoholen, vorzugsweise Monoalkoholen, mit Phosgen. Weiterhin können sie auch durch oxidative Carbonylierung der Alkohole oder Phenole mittels CO in Gegenwart von Edelmetallen, Sauerstoff oder $NO_x$ hergestellt werden. Die Herstellung von Diaryl- oder Dialkylcarbonaten ist auch in "Ullmann's Encyclopedia of Industrial Chemistry", 6th Edition, 2000 Electronic Release, Verlag Wiley-VCH, beschrieben.

Beispiele geeigneter Carbonate umfassen aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat und Didodecylcarbonat.

Bevorzugt werden aliphatische Carbonate eingesetzt, insbesondere solche, bei denen die Reste 1 bis 5 C-Atome umfassen, wie z. B. Dimethylcarbonat, Diethylcarbonat, Dipropylcarbonat, Dibutylcarbonat oder Diisobutylcarbonat.

Die organischen Carbonate werden mit mindestens einem aliphatischen Alkohol ($B_3$ oder $C_x$), welcher mindestens drei OH-Gruppen aufweist, oder einem Gemisch aus zwei oder mehr dieser Alkohole umgesetzt.

Mindestens trifunktionelle Alkohole ($B_3$ bzw. $C_x$) sind bereits unter der vierten Ausführungsform definiert und können wie oben definiert eingesetzt werden.

Diese mehrfunktionellen Alkohole können auch im Gemisch mit difunktionellen Alkoholen ($B_2$) eingesetzt werden mit der Maßgabe, dass die mittlere OH-Funktionalität aller eingesetzten Alkohole zusammen größer als 2 ist. Die difunktionellen Alkohole (B2) sind ebenfalls bereits definiert und können wie oben definiert eingesetzt werden.

Die Reaktion des Carbonats mit dem Alkohol oder Alkoholgemisch zum hyperverzweigten Polycarbonat gemäß 1.) erfolgt unter Eliminierung des monofunktionellen Alkohols oder Phenols aus dem Carbonat-Molekül.

Die Reaktion des Phosgens oder Phosgenderivats mit dem Alkohol oder Alkoholgemisch zum hyperverzweigten Polycarbonat gemäß 2.) erfolgt unter Eliminierung von Chlorwasserstoff.

Die gebildeten hyperverzweigten Polycarbonate sind nach der Reaktion, also ohne weitere Modifikation, mit Hydroxylgruppen und/oder mit Carbonatgruppen terminiert.

Unter einem hyperverzweigten Polycarbonat ist ein Produkt zu verstehen, das neben den Carbonatgruppen, die das Polymergerüst bilden, end- oder seitenständig weiterhin mindestens vier, bevorzugt mindestens acht funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 200, insbesondere nicht mehr als 100 end- oder seitenständige funktionelle Gruppen auf.

Hyperverzweigte Polycarbonate im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Die Herstellung der hydrophoben hyperverzweigten Polycarbonate wird beispielsweise in WO 2009112576 beschrieben.

Weiter können die Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d. h. nach Beendigung der eigentlichen Polykondensation erfolgen.

Eine nachträgliche Funktionalisierung kann man erhalten, indem das erhaltene hochfunktionelle, hyperverzweigte Polycarbonat mit einem geeigneten Funktionalisierungsreagenz, welches mit den OH- und/oder Carbonatgruppen des Polycarbonates reagieren kann, umsetzt.

Hydroxylgruppen enthaltende hochfunktionelle, hyperverzweigte Polycarbonate können z. B. durch Zugabe von Säuregruppen- oder Isocyanatgruppen enthaltenden Molekülen F modifiziert werden. Beispielsweise lassen sich Polycarbonate durch Umsetzung mit Moncarbonsäuren oder Monoisocyanaten hydrophob modifizieren.

Geeignete hydrophobe langkettige aliphatische Carbonsäuren sind beispielsweise Octansäure, Decansäure, Dodecansäure, Tetradecansäure und Fettsäuren, wie Stearinsäure, Ölsäure, Laurinsäure, Palmitinsäure, Linolsäure und Linolensäure.

Weiterhin können Hydroxylgruppen enthaltende hochfunktionelle Polycarbonate auch durch Umsetzung mit Propylenoxid und/oder Butylenoxid zu hydrophoben hyperverzweigten Polycarbonat-Polyetherpolyole umgesetzt werden.

In einer Ausführungsform I) der Erfindung ist der Alkohol $B_3$ bzw. $B_2$ und/oder $C_x$ ein hydrophobes Alkoxylat auf Basis von Propylenoxid oder Butylenoxid mit im Mittel mindestens 1 und höchstens 100 Oxyalkylen-Einheiten pro Startermolekül, bevorzugt höchstens 50 Oxyalkylen-Einheiten pro Startermolekül. Bevorzugte Alkohole $B_3$ bzw. $B_2$ und/oder $C_x$ sind die Propoxylate von Monoethylenglykol, Diethylenglykol, Propylenglykol, Dipropylenglykol, Tripropylenglykol, Glycerin, Trimethylolpropan, Pentaerythrit, Sorbitol, Saccharose, die im Mittel 1 bis 30 Oxypropylen-Einheiten pro OH-Gruppe aufweisen, insbesondere 1 bis 20 Oxypropylen-Einheiten pro OH-Gruppe aufweisen.

In einer weiteren Ausführungsform II) der Erfindung enthalten die Alkohole $B_3$ bzw. $B_2$ und/oder $C_x$ mindestens 20 Mol-%, bevorzugt mindestens 30 Mol-%, insbesondere 40 Mol-% und ganz insbesondere mindestens 50 Mol-% eines langkettigen Diols bzw. Polyols mit mindestens 8 C-Atomen, bevorzugt mit mindestens 10 C-Atomen, besonders bevorzugt mit mindestens 12 C-Atomen. Besonders bevorzugte Diole bzw. Polyole mit mindestens 8 C-Atomen sind Isomere des Octandiols, des Nonandiols, des Decandiols, des Dodecandiols, des Tetradecandiols, des Hexadecandiols, des Octadecandiols, des Dimethyolcyclohexans und des Dimethylolbenzols.

In einer weiteren Ausführungsform III) der Erfindung werden mindestens 10 Mol-% und höchstens 90 Mol-%, bevorzugt höchstens 70 Mol-%, besonders bevorzugt höchstens 50 Mol-%, und insbesondere bevorzugt höchstens 30 Mol-% bezogen auf die gemäß a) und b) umgesetzten Alkohole $B_3$, $B_2$ und/oder $C_x$ eines langkettigen Monoalkohols $E_1$ mit mindestens 8 C-Atomen, bevorzugt mindestens 10 C-Atomen mit umgesetzt. Bevorzugte langkettige Monoalkohole sind Octanol, Decanol, Dodecanol, Tetradecanol, C16-Alkohole und C18-Alkohole.

In einer weiteren Ausführungsform IV) der Erfindung wird das aus den Komponenten a) und b) erhaltene Umsetzungsprodukt anschließend mit 10 bis 100 Mol-%, bevorzugt 20 bis 100 Mol-%, besonders bevorzugt 20 bis 80 Mol-%, insbesondere bevorzugt 20 bis 60 Mol-% bezogen auf die mittlere Anzahl der OH-Gruppen des hyperverzweigten Polycarbonats, einer langkettigen hydrophoben OH-reaktiven Verbindung F, wie eine Monocarbonsäure oder ein Monoisocyanat, mit mindestens 8 C-Atomen, bevorzugt mindestens 10 C-Atomen, insbesondere mit mindestens 12 C-Atomen umgesetzt. Bevorzugte langkettige Monocarbonsäuren F sind Octansäure, Decansäure, Dodecansäure, Tetradecansäure und Fettsäuren, wie Stearinsäure und Ölsäure. Bevorzugte langkettige Monoisocyanate F sind Octanisocyanat, Decanisocyanat, Dodecanisocyanat, Tetradecanisocyanat und Monoisocyanate von Fettsäuren, wie Stearylisocyanat und Oleylisocyanat.

Insbesondere bevorzugte hydrophobe hyperverzweigte Polycarbonate werden erhalten, wenn

I) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist;

oder

I) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

eine der beiden Komponenten, die Kohlensäureester- oder die Alkohol-Komponente, im Reaktionsgemisch zur Synthese des hyperverzweigten Polycarbonats im molaren Überschuss eingesetzt wird und das molare Verhältnis der (CO)OR-Gruppen in Bezug auf die OH-Gruppen bzw. der Überschuss der OH-Gruppen in Bezug auf die (CO)OR-Gruppen von 1.1 : 1 bis 3 : 1, bevorzugt von 1.3 : 1 bis 2.8 : 1, bevorzugt von 1.5 : 1 bis 2.6 : 1, besonders bevorzugt von 1.7 : 1 bis 2.4 : 1, ganz bevorzugt von 1.8 : 1 bis 2.2 : 1, und insbesondere bevorzugt von 1.9 : 1 bis 2.1 : 1 beträgt, oder

I) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

III) mindestens 10 Mol-% und höchstens 90 Mol-%, bevorzugt höchstens 70 Mol-%, besonders bevorzugt höchstens 50 Mol-%, und insbesondere bevorzugt höchstens 30 Mol-%, bezogen auf die gemäß a) und b) umgesetzten Alkohole $B_3$, $B_2$ und/oder $C_x$ eines langkettigen Monoalkohols $E_1$ mit mindestens 8 C-Atomen mit umgesetzt werden,

oder

I) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

IV) anschließend das Umsetzungsprodukt aus a) und b) mit 10 bis 100 Mol-%, bevorzugt 20 bis 100 Mol-%, besonders bevorzugt 20 bis 80 Mol-%, insbesondere bevorzugt 20 bis 60 Mol-% bezogen auf die mittlere Anzahl der OH-Gruppen des hyperverzweigten Polycarbonats, einer langkettigen hydrophoben OH-reaktiven Verbindung $F_1$, wie einer Monocarbonsäure oder einem Monoisocyanat mit mindestens 8 C-Atomen, umgesetzt wird.

Das erfindungsgemäß eingesetzte hydrophobe hyperverzweigte Polycarbonat weist im Allgemeinen ein zahlenmittleres Molekulargewicht $M_n$ von 800 bis 40000 g/mol, vorzugsweise von 1000 bis 30000 g/mol und insbesondere von 1500 bis 20000 g/mol auf, gemessen mit GPC, kalibriert mit Polymethylmethacrylat (PMMA)-Standard.

Es hat sich gezeigt, dass ein gewichtsmittleres Molgewicht $M_w$, gemessen mit GPC, kalibriert mit Polymethylmethacrylat (PMMA) Standard, von 2000 bis 50000 g/mol, bevorzugt von 3000 bis 40000 g/mol, besonders bevorzugt von 4000 bis 35000 g/mol und insbesondere bevorzugt von 5000 bis 30000 g/mol besonders vorteilhaft ist.

Im Allgemeinen weist das erfindungsgemäß eingesetzte hydrophobe hyperverzweigte Polycarbonat eine OH-Zahl von 0 bis 600, vorzugsweise von 0 bis 500, insbesondere von 0 bis 400 mg KOH/g Polycarbonat gemäß DIN 53240 auf.

Weiter haben die erfindungsgemäß eingesetzten hydrophoben hyperverzweigten Polycarbonate im Allgemeinen eine Glasübergangstemperatur (gemessen nach der ASTM Methode D3418 - 03 mit DSC) von -80 bis 100 °C, bevorzugt von -60 bis 60 °C.

Nach beendeter Reaktion zur Herstellung der hyperverzweigten Polycarbonate lassen sich die hyperverzweigten Polycarbonate leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser oder einem anderen Lösemittel, in dem sich das hyperverzweigte Polycarbonat nicht löst, und anschließendes Waschen und Trocknen.

Sofern die Herstellung des hyperverzweigten Polycarbonats ohne Zusatz von Lösemittel und unter Zugabe von nur geringen Katalysatormengen erfolgt ist, liegt das Reaktionsprodukt nach beendeter Reaktion bereits als isoliertes hyperverzweigtes Polycarbonat vor und kann in der Regel ohne weitere Reinigungsschritte verwendet werden.

Das hydrophobe hyperverzweigte Polycarbonat wird im Allgemeinen in Mengen von 0,2 bis 40 Gew.-%, bevorzugt 1 bis 30 Gew.-%, besonders bevorzugt 2 bis 20 Gew.-% und insbesondere 2,5 bis 7,5 Gew.-%, bezogen auf die Summe aus höhermolekularer Verbindung b) und hydrophobem hyperverzweigtem Polycarbonat, eingesetzt. In der Regel ist bereits eine Menge von 3 Gew.-% hydrophobem hyperverzweigten Polycarbonat ausreichend, um die gewünschte Offenzelligkeit und Grobzelligkeit hervorzurufen und damit die sehr gute Weiterreißfestigkeit der Polyurethanschäume bereitzustellen.

Die Komponenten (a) bis (f) der ersten oder zweiten Ausführungsform werden zur Herstellung eines erfindungsgemäßen Polyurethanschaumstoffs jeweils in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,7 bis 1 : 1,25, vorzugsweise 1 : 0,85 bis 1 : 1,15 beträgt.

Die erfindungsgemäßen Polyurethanschaumstoffe werden vorzugsweise nach dem one-shot-Verfahren mit Hilfe der Niederdruck- oder Hochdrucktechnik hergestellt. Dabei kann die Reaktionsmischung in ein offenes oder geschlossenes, gegebenenfalls temperiertes Formwerkzeug gegeben werden. Die Formwerkzeuge bestehen gewöhnlich aus Metall, z.B. Aluminium oder Stahl oder aus Pappe oder Holz. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7. Besonders bevorzugt werden die erfindungsgemäßen Polyurethanschaumstoffe durch freies Schäumen erhalten. So kann die die Reaktionsmischung beispielsweise auf ein kontinuierlich laufendes Band gegeben und ausgehärtet werden.

Die Menge der in das Formwerkzeug eingebrachten Reaktionsmischung wird so bemessen, dass die erhaltenen Formkörper aus Schaumstoffen eine Dichte von 70 bis 300 g/dm³, vorzugsweise 80 bis 300, besonders bevorzugt 90 bis 300 und insbesondere von 100 bis 250 g/dm³ aufweisen.

Ein erfindungsgemäßer Polyurethanschaumstoff weist 1 bis 20, vorzugsweise 1 bis 10 Zellen pro cm auf. Dabei zeigt dieser hervorragende mechanische Eigenschaften wie Reißdehnung, Weiterreißfestigkeit, Bruchdehnung und Rückprallelastizität auf. Ein ausreichend gutes Rückprallverhalten kombiniert mit einer ausreichenden Stauchhärte ist insbesondere dann erforderlich, wenn der erfindungsgemäße Polyurethanschaumstoff zur Adsorption von Öl auf der Oberfläche von Gewässern eingesetzt wird. Dadurch wird das aufgenommene Öl nicht bereits bei geringen mechanischen Belastungen, wie beispielsweise durch Wellengang, wieder an das Gewässer abgegeben. Vorzugsweise ist die Rückprallelastizität nach DIN 53573 30 % oder größer, besonders bevorzugt 35% oder größer und insbesondere 40% oder größer Bevorzugt weist ein erfindungsgemäßer Polyurethanschaumstoff bei einer Dichte von 125 g/dm3 nach 24 Stunden Lagerung eine Zugfestigkeit nach DIN EN ISO 1798 von größer 200 kPa besonders bevorzugt größer 230 kPa und insbesondere größer 250 kPa, eine Bruchdehnung nach DIN EN ISO 1798 von größer 200%, besonders bevorzugt größer 250 %, eine Weiterreißfestigkeit nach ISO 34-1 von größer 1,2 N/mm, besonders bevorzugt von größer 1,6 N/mm und insbesondere von größer 2,0 N/mm und eine Stauchhärte bei 40% kompressibler Verformung nach DIN EN ISO 3386 von größer 4 kPa, besonders bevorzugt größer 8 kPa, auf.

Aufgrund einer gewissen Hydrophobie der Oberfläche und der hervorragenden mechanischen Eigenschaften sind erfindungsgemäße Polyurethanschaumstoffe hervorragend zur Adsorption von hydrophoben Flüssigkeiten geeignet. Dazu werden die erfindungsgemäßen Polyurethanschaumstoffe mit den hydrophoben Flüssigkeiten in Kontakt gebracht. Anschließend können die hydrophoben Flüssigkeiten durch Auspressen aus dem Polyurethanschaumstoff, beispielsweise mit Hilfe von Pressen, Walzen, Kalandern, wiedergewonnen werden. Dadurch ist auch ein mehrfacher Einsatz des erfindungsgemäßen Polyurethanschaumstoffs zur Aufnahme von Öl möglich.

Beispielsweise kann ein "in Kontakt bringen" durch Ausbringen des erfindungsgemäßen Schaumstoffs auf mit Öl, beispielsweise Rohöl, kontaminiertes Gewässers geschehen. Dazu kann der Schaumstoff in beliebiger Art und Weise vorliegen. Beispielsweise können Bahnen mit einer Breite von 10 cm bis 10 m, einer Dicke von 1 cm bis 2 m und einer Länge von 10 cm bis 100 m eingesetzt werden. Durch die Grobzelligkeit des erfindungsgemäßen Schaumstoffs können selbst hochviskose Öle und Teerrückstände, beispielsweise nach Ölunfällen, aufgenommen werden. Durch die hervorragenden mechanischen Eigenschaften des Schaumstoffs ist auch ein Ausbringen als fest verankerte Ölbarriere möglich. Dabei wird der Schaumstoff beispielsweise vor einem Hafenausgang oder einem zu schützenden Gewässerabschnitt oder Ufer ausgebracht und verankert. Auch hier ist die Form des Schaumstoffs beliebig. So können beispielsweise Schaumstoffbahnen, wie oben beschrieben, oder aufgefädelte Schaumstoffstücke, beispielsweise Bälle, verwendet werden.

Auch können erfindungsgemäße Polyurethanschwämme zum Reinigen von ölverschmutzten Gegenständen und Lebewesen, beispielsweise durch Abwischen oder Abtupfen, eingesetzt werden.

Auch Wellengang führt nicht zum Zerstören des Schaumstoffs und auch nicht dazu, dass aufgenommenes Öl ungewollt wieder abgegeben wird. Weiter kann der Öl enthaltende Schaumstoff leicht wieder aufgenommen werden, da dieser durch die guten mechanischen Eigenschaften nur schwer zerreißt und insbesondere durch die hohe Rückprallelastizität in Kombination mit der hohen Stauchhärte nicht bereits bei geringen mechanischen Belastungen wie durch das wieder Aufnehmen des Öl enthaltenden Schaums aus dem Gewässer, dieses Öl ungewollt wieder abgegeben wird.

Weiter können erfindungsgemäße Schaumstoffe auch als Ölreservoir, beispielsweise in einer mechanischen Anordnung dienen. So kann ein aus einem erfindungsgemäßen Polyurethanschaumstoff geformtes Formteil, beispielsweise ein Zahnrad, mit Öl getränkt werden und in einer mechanischen Anordnung, beispielsweise in Form von Metallzahnrädern, mitlaufen, wobei das im Polyurethan-Formteil enthaltene Öl kontrolliert an die Metallzahnräder oder die andere mechanische Anordnung abgeben kann.

Im Folgenden wird die Erfindung im Rahmen von Beispielen verdeutlicht:

Augangsmaterialien

| | |
|---|---|
| Polyol 1: | Polyesterpolyol auf Basis von Adipinsäure, Ethylenglycol (0,66 mol%) und 1,4-Butandiol (0,33 mol%) mit OH-Zahl von 56 mg KOH/g |
| Polyol 2 | hyperverzweigter Polyester |
| Polyol 3 | hyperverzweigtes Polycarbonat |
| Kettenverlängerungsmittel 1: | Monoethylenglycol |
| Kettenverlängerungsmittel 2: | 1,4-Butandiol |
| Katalysator: | Triethylendiamin |
| Inhibitor: | Diethylenglycol-bis-chlorformiat |
| Schaumstabilisator: | DC 193® der Firma Dow Corning, silikonbasiert |
| Treibmittel: | Wasser |
| Isocyanat: | Prepolymer bestehend aus 53,8 Gew.-Teilen 4,4'-Diphenylmethandiisocyanat (4,4'-MDI), 4,3 Gew.-Teilen Carbodiimid-modifiziertem 4,4'-MDI, 31,2 Gew.-Teilen Polyol 1 und 10,7 Gew.-Teilen eines Polyesterpolyols auf Basis von Adipinsäure, Ethylenglycol (0,2 mol%), Diethylenglycol (0,75 mol%) und Glycerin (0,05 mol%) mit OH-Zahl von 60 mg KOH/g. |

Carbodiimid-modifiziertes 4,4'-MDI: NCO-Gehalt = 29,5 Gew.%, Viskosität = 40 mPas (25°C)

Polyol 2: hyperverzweigter Polyester, enthaltend Hydroxylgruppen, Carboxylgruppen, Polyethergruppen und Alkylreste als funktionelle Elemente:

1914 g (5,50 mol, M = 348 g/mol) einer C-18-Alkenylbernsteinsäure (Pentasize 8 der Fa. Trigon), 649,7 g (1,51 mol, M = 430 g/mol) eines Polyetherols auf Basis von Trimethylolpropan, das statistisch mit 5 Propylenoxid-Einheiten gepfropft wurde, und 0,2 g Titan-(IV)-butylat wurden in einen 4 L-Glaskolben, ausgestattet mit Rührer, Innenthermometer und absteigendem Kühler mit Vakuumanschluss eingewogen und unter Rühren langsam auf 195 °C erhitzt, wobei der Druck langsam auf 70 mbar verringert wurde. Die Reaktionsmischung wurde anschließend 10 h bei 195 °C gerührt, wobei das bei der Reaktion entstehende Wasser abdestillierte.

Die Abnahme der Säurezahl wurde regelmäßig kontrolliert bis ein Wert von etwa 105 mg KOH / g erreicht war. Danach wurde das Produkt abgekühlt und analysiert.

Analytik:

Säurezahl: 102 mg KOH / g
GPC: Mn = 1000g/mol, Mw = 6700 g/mol (Eluent: THF, Kalibrierung: PMMA)

Polyol 3: hyperverzweigtes Polycarbonat, enthaltend Hydroxylgruppen, Carbonatgruppen, Polyethergruppen und Alkylreste als funktionelle Elemente:

In einem 2-l-Kolben, der mit Rührer, Innenthermometer und Rückflußkühler versehen war, wurde Diethylcarbonat (144 g, 1,22 mol) mit einem Triol (1149 g, 1,11 mol) auf Basis von Trimethylolpropan, das statistisch mit 15 Propylenoxid-Einheiten gepfropft wurde, in Gegenwart von Dibutylzinn-dilaurat (1,0 g) bei Normaldruck unter leichter Stickstoffbegasung bei ca. 140°C umgesetzt. Im Laufe der Reaktion bildete sich in der Reaktionsmischung stetig Ethanol als Kondensationsprodukt, so dass sich der Siedepunkt der Reaktionsmischung innerhalb von 12 h bis auf ca. 120 °C absenkte. Nun wurde der Rückflusskühler durch eine Destillationsvorrichtung, bestehend aus einer 20 cm Füllkörperkolonne, einem absteigendem Kühler und einer Vorlage, ausgetauscht und das bei der Reaktion gebildete Destillat entfernt. Nachdem etwa 85 g Destillat übergegangen waren, wurde die Reaktionsmischung auf 100°C abgekühlt, mit einem Gaseinleitungsrohr versehen und ca. 1 h mit Stickstoff bei dieser Temperatur gestrippt. Hierbei wurden weitere Reste von Ethanol bzw. anderen flüchtigen Komponenten entfernt. Anschließend wurde das Produkt abgekühlt und analysiert.

Analytik:

OH-Zahl: 85 mg KOH/g
GPC: Mn = 4200g/mol, Mw = 14500 g/mol (Eluent: Dimethylacetamid, Kalibrierung: PMMA)

Die Analyse der Polyole 2 und 3 erfolgte wie folgt:

Die Polyole 2 und 3 wurden per Gelpermeationschromatographie mit einem Refraktometer als Detektor analysiert. Als mobile Phase wurde Tetrahydrofuran (THF) oder Dimethylacetamid (DMAc) verwendet, als Standard zur Bestimmung des Molekulargewichts wurde Polymethylmethacrylat (PMMA) eingesetzt. Die Bestimmung der OH-Zahl und der Säurezahl erfolgte nach DIN 53240, Teil 2.

Die verwendete Polyolkomponente A besteht aus 84,7 Gew.-Teilen Polyol 1, 5 Gew.-Teilen Polyol 2, 5 Gew.-Teilen Kettenverlängerungsmittel 1, 3 Gew.-Teilen Kettenverlängerungsmittel 2, 0,7 Katalysator, 0,1 Gew.-Teilen Inhibitor, 0,1 Gew.-Teilen Schaumstabilisator und 1,4 Gew.-Teilen Treibmittel.

Die verwendete Polyol-Komponente B besteht aus 85,8 Gew.-Teilen Polyol 1, 4,5 Gew.-Teilen Polyol 3, 4,4 Gew.-Teilen Kettenverlängerungsmittel 1, 3 Gew.-Teilen Kettenverlängerungsmittel 2, 0,7 Gew.-Teilen Katalysator, 0,1 Gew.-Teilen Inhibitor, 0,1 Gew.-Teilen Schaumstabilisator und 1,4 Gew.-Teilen Treibmittel

Versuche:

Reaktionsmischung 1 (RM1):

100 Gew.-Teile der Polyolkomponente A (45 °C) und 115 Gew.-Teile von Isocyanat (40 °C) wurden mit einer Niederdruckgießmaschine miteinander vermischt, diese Mischung in einen Kunststoffeimer (5L) gegeben und der so hergestellte offen- und grobzellige Schaum erhalten.

Reaktionsmischung 2 (RM2):

100 Gew.-Teile der Polyolkomponente B (45 °C) und 117 Gew.-Teile von Isocyanat (40°C) wurden mit einer Niederdruckgießmaschine miteinander vermischt, diese Mischung in einen Kunststoffeimer (5L) gegeben und der so hergestellte offen- und grobzellige Schaum erhalten.

Die mechanischen Eigenschaften der hergestellten Schaumproben wurden nach 24 Stunden Lagerung gemäß den DIN EN ISO 1798, 3386, 53573, 53504, 53512 und ISO 34-1 bestimmt und sind in Tabelle 1 aufgelistet.

Die Ölaufnahme wurde über interne Verfahren bestimmt:

Drei unterschiedliche Öle (Heizöl, Pyrolyseöl und Naphtha) wurden getestet

Verfahren 1) "reine Ölaufnahme"

Der Schaumstoff wurde in Würfel geschnitten (1,4 g < Gewicht < 2 g), auf die Öloberfläche (100mL Öl) gelegt und für 24 Stunden dort belassen. Danach wurde der Schaumstoff mit einer Zange aus dem Öl genommen und 5 Sekunden abtropfen gelassen. Dann wurde die prozentuale Gewichtszunahme bestimmt. Die Mittelwerte aus der Doppelbestimmung sind in Tabelle 1 angegeben.

$$\text{Gewichtszunahme [g/g\%]} = \frac{Gewicht_t - Gewicht_0}{Gewicht_0} \, x \, 100$$

Im Fall des Heizöls wurde weiterhin getestet, wie viel Gew.-Prozent des Öls wieder aus dem Schwamm herausgedrückt werden konnte. Dazu wurde der Öl enthaltende Schaumstoffwürfel in eine Petrischale gegeben und mit einer Zange ausgepresst. Die in der Petrischale aufgenommene Ölmenge wurde bestimmt. Anschließend wurde das herausgepresste Öl gewogen.

Verfahren 2) Ölaufnahme von Wasseroberfläche, bzw. aus einem Wasser/Pyrolyseöl-Gemisch

2a) Heizöl und Naphtha

In ein 200 mL Becherglas wurden 100 mL Wasser und 20 mL Öl gegeben. Anschließend wurde der Schaumstoffwürfel (1,4 g < Gewicht < 2 g) auf die Flüssigkeitsoberfläche gelegt. Nach einer Minute wurde nach dem oben beschriebenen Verfahren die Menge an Flüssigkeit bestimmt, die aufgenommen worden war. Anschließend wurde der Schaum ausgepresst und die Flüssigkeit in einen Standzylinder gegeben. Auch nach 24 Stunden zeigte sich bei der Flüssigkeit keine Phasenseparation. Dies zeigt, dass die herausgepresste Flüssigkeit ausschließlich aus Öl bestand.

2b) Pyrolyseöl

Als Pyrolyseöl wurde der Destillationsrückstand bei der Destillation von Naphta eingesetzt. Dieses Öl weist eine Dichte von 1,28 $g/cm^3$ und eine Viskosität von 860 mPas (23°C) auf. Da das Pyrolyseöl eine Dichte > 1 g/mL aufweist, sinkt es in der Wasser (100 mL) / Öl (20 mL) Mischung auf den Gefäßboden. Daher wurden die Schaumstoffwürfel mit der Wasser/Öl Mischung für 1 Minute geschüttelt. Danach wurde die Menge an Flüssigkeit bestimmt, die aufgenommen wurde.

Tabelle 1:

| Schaum aus | RM1 |
|---|---|
| Raumgewicht in $g/dm^3$ | 135 |
| Stauchhärte bei 40% Stauchung in kPa | 13 |
| Zugfestigkeit in kPa | 297 |
| Bruchdehnung in % | 303 |

(fortgesetzt)

| Schaum aus | RM1 |
|---|---|
| Weiterreißfestigkeit in N/mm | 2,9 |
| Rückprallelastizität in % | 43 |
| Zellstruktur | grob, offen |
| Heizölaufnahme (Gew.-%) (Verfahren 1) | 215 |
| herauspressbare Heizölmenge (Gew.-%) | 88% |
| Pyrolyseölaufnahme (Gew.-%) (Verfahren 1) | 440 |
| Naphthaölaufnahme (Gew.-%) (Verfahren 1) | 215 |
| Flüssigkeitsaufnahme (Gew.-%) für Pyrolyseöl/Wasser Mischung (Verfahren 2) | 310 |
| Flüssigkeitsaufnahme (Gew.-%) für Naphthaöl/Wasser Mischung (Verfahren 2a) | 199 |
| Flüssigkeitsaufnahme (Gew.-%) für Pyrolyseöl/Wasser Mischung (Verfahren 2b) | 310 |

Die Tabelle zeigt, dass die hergestellte Schaumprobe aus der erfindungsgemäßen Reaktionsmischung neben der offenen und groben Zellstruktur auch sehr gute mechanische Eigenschaften aufweist. Vor allem die Kombination von hoher Rückprallelastizität und hoher Stauchhärte machen den Einsatz des Schaumstoffes als Öl-aufnehmendes Medium möglich. Dabei kann bei einem Raumgewicht von 135 g/dm$^3$ in sehr kurzer Zeit mehr als 200 % des Eigengewichts an Öl aufgenommen werden.

**Patentansprüche**

1. Verfahren zur Aufnahme von hydrophoben Flüssigkeiten, bei dem man einen Polyurethanschwamm mit eine Dichte von 70 bis 300 g/dm$^3$, 1 bis 20 Zellen/cm, einer Rückprallelastizität größer 30 %, einer Bruchdehnung von größer 200 %, einer Weiterreißfestigkeit von größer 1,2 N/mm, einer Stauchhärte von größer 4 kPa und einer Zugfestigkeit von größer 200 kPa, enthaltend hydrophobe Gruppen, mit der hydrophoben Flüssigkeit in Kontakt bringt.

2. Verfahren nach Anspruch 1, wobei der Polyurethanschaumstoff erhältlich ist durch vermischen von

   a) Isocyanatgruppen aufweisende Verbindungen auf Basis von a1) MDI und gegebenenfalls a2) Polyetherolen und/oder a3) Polyesterolen sowie gegebenenfalls a4) Kettenverlängerer, wobei der Gehalt an MDI mit einer Funktionalität von größer 2 kleiner als 30 Gew.-%, bezogen auf das Gesamtgewicht des MDIs a1) ist,
   b) höhermolekulare Verbindungen mit gegenüber Isocyanat reaktiven Gruppen, enthaltend Polyetherole und/ oder Polyesterole,
   c) Treibmittel, enthaltend Wasser sowie gegebenenfalls
   d) Kettenverlängerer,
   e) Katalysator sowie
   f) sonstige Hilfsmittel und/oder Zusatzstoffe

   zu einer Reaktionsmischung und ausreagieren lassen zum Polyurethanschaumstoff,
   wobei als höhermolekulare Verbindung b) eine Mischung, enthaltend Polyesterpolyol und hyperverzweigten Polyester, eingesetzt wird, wobei der hyperverzweigte Polyester erhältlich ist durch Umsetzung mindestens einer Dicarbonsäure oder von Derivaten derselben mit

   s1) mindestens einem mindestens dreiwertigen Alkohol (B$_3$), oder
   t1) mit mindestens einem zweiwertigen Alkohol (B$_2$) und mindestens einem x-wertigen Alkohol (C$_x$), der mehr als zwei OH-Gruppen aufweist, wobei x eine Zahl größer 2 ist, wobei die Gesamtmischung der eingesetzten Alkohole eine mittlere Funktionalität von 2,1 bis 10 aufweist,

   oder durch Umsetzung mindestens einer Polycarbonsäure (D$_y$) oder deren Derivat, die mehr als zwei Säuregruppen aufweist, wobei y eine Zahl größer 2, mit

s2) mindestens einem mindestens zweiwertigen Alkohol ($B_2$), oder

t2) mit mindestens einem zweiwertigen Alkohol ($B_2$) und mindestens einem x-wertigen Alkohol ($C_x$), der mehr als zwei OH-Gruppen aufweist, wobei x eine Zahl größer 2 ist,

wobei

u) bis zu 50 mol-%, bevorzugt bis zu 40 mol-%, besonders bevorzugt bis zu 30 mol-%, und insbesondere bevorzugt bis zu 20 mol-% bezogen auf die gemäß s1), s2), t1) und t2) umgesetzten Alkohole $B_3$, $B_2$ und/oder $C_x$, eines hydrophoben langkettigen monofunktionellen Alkohols $E_1$ mit mindestens 8 C-Atomen mit umgesetzt werden können, und

v) optional anschließender Umsetzung mit einer langkettigen hydrophoben Monocarbonsäure mit mindestens 8 C-Atomen,

wobei eine oder mehrere der nachstehenden Bedingungen erfüllt sind:

i) der Alkohol $B_3$ bzw. $B_2$ und/oder $C_x$ ist ein hydrophobes Alkoxylat auf Basis von Propylenoxid, Butylenoxid oder Styroloxid mit im Mittel mindestens 1 und höchstens 100 Oxyalkylen-Einheiten pro Startermolekül, und einem difunktionellen (für $B_2$), trifunktionellen (für $B_3$) oder x-funktionellen (für $C_x$) Startermolekül;

ii) die Alkohole $B_3$ bzw. $B_2$ und/oder $C_x$ enthalten mindestens 20 mol.-%, bevorzugt mindestens 30 mol.-%, besonders bevorzugt mindestens 40 mol-%, und ganz besonders bevorzugt mindestens 50 mol-% eines langkettigen Diols bzw. Polyols mit mindestens 8 C-Atomen;

iii) die Dicarbonsäure ist eine hydrophobe langkettige aliphatische Dicarbonsäure, eine aromatische oder cycloaliphatische Dicarbonsäure mit mindestens 8 C-Atomen, bzw. die Carbonsäure $D_y$ mit mehr als zwei Säuregruppen ist eine hydrophobe langkettige aliphatische Polycarbonsäure, eine aromatische oder cycloaliphatische Polycarbonsäure mit mindestens 9 C-Atomen;

iv) mindestens 10 mol-% und höchstens 90 mol.-%, bevorzugt höchstens 70 mol-%, besonders bevorzugt höchstens 50 mol-%, und insbesondere bevorzugt höchstens 30 mol-% bezogen auf die gemäß s1), s2), t1) und t2) umgesetzten Alkohole $B_3$, $B_2$ und/oder $C_x$ eines langkettigen Monoalkohols $E_1$ mit mindestens 8 C-Atomen werden mit umgesetzt;

v) es wird anschließend mit 10 bis 100 mol.-%, bevorzugt 10 bis 80 mol-%, besonders bevorzugt 20 bis 80 mol-%, insbesondere bevorzugt 20 bis 60 mol-% bezogen auf die mittlere Anzahl der OH-Gruppen des hyperverzweigten Polyesters, einer langkettigen hydrophoben Monocarbonsäure mit mindestens 8 C-Atomen umgesetzt.

3. Verfahren nach Anspruch 2, **dadurch gekennzeichnet, dass**

i) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

iii) dieser mit einer hydrophoben langkettigen aliphatischen Dicarbonsäure, einer aromatischen oder cycloaliphatischen Dicarbonsäure mit mindestens 8 C-Atomen, oder mit einer hydrophoben langkettigen aliphatischen Polycarbonsäure, einer aromatischen oder cycloaliphatischen Polycarbonsäure $D_y$ mit mehr als zwei Säuregruppen und mindestens 9 C-Atomen umgesetzt wird.

4. Verfahren nach Anspruch 3, **dadurch gekennzeichnet, dass** die Umsetzung mit einer langkettigen aliphatischen Dicarbonsäure mit mindestens 8 C-Atomen oder mit einer hydrophoben langkettigen aliphatischen Polycarbonsäure mit mindestens 9 Atomen durchgeführt wird.

5. Verfahren nach Anspruch 2, **dadurch gekennzeichnet, dass**

i) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

iv) mindestens 10 mol-% und höchstens 90 mol.-%, bezogen auf die gemäß s1), s2), t1) und t2) umgesetzten Alkohole $B_3$, $B_2$ und/oder $C_x$ eines langkettigen Monoalkohols mit mindestens 8 C-Atomen mit umgesetzt werden,

6. Verfahren nach Anspruch 2, **dadurch gekennzeichnet, dass**

i) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und

v) anschließend das Umsetzungsprodukt aus s1) und t1) bzw. s2) und t2) mit 10 bis 100 mol.-%, bezogen auf die mittlere Anzahl der OH-Gruppen des hyperverzweigten Polyesters, einer langkettigen hydrophoben Monocarbonsäure F mit mindestens 8 C-Atomen umgesetzt wird.

**7.** Verfahren nach Anspruch 1, wobei der Polyurethanschaumstoff erhältlich ist durch vermischen von

a) Isocyanatgruppen aufweisende Verbindungen auf Basis von a1) MDI und gegebenenfalls a2) Polyetherolen und/oder a3) Polyesterolen sowie gegebenenfalls a4) Kettenverlängerer, wobei der Gehalt an MDI mit einer Funktionalität von größer 2 kleiner als 30 Gew.-%, bezogen auf das Gesamtgewicht des MDIs a1) ist,

b) höhermolekulare Verbindungen mit gegenüber Isocyanat reaktiven Gruppen, enthaltend Polyetherole und/oder Polyesterole,

c) Treibmittel, enthaltend Wasser sowie gegebenenfalls

d) Kettenverlängerer,

e) Katalysator sowie

f) sonstige Hilfsmittel und/oder Zusatzstoffe

zu einer Reaktionsmischung und ausreagieren lassen zum Polyurethanschaumstoff,

wobei als höhermolekulare Verbindung b) eine Mischung, enthaltend Polyesterpolyol und hyperverzweigtes Polycarbonat, eingesetzt wird, wobei das hyperverzweigte Polycarbonat erhältlich ist durch Umsetzung mindestens eines Kohlensäureesters ($A_2$) oder von Derivaten desselben mit

l) mindestens einem mindestens dreiwertigen Alkohol ($B_3$), oder

m) mit mindestens einem zweiwertigen Alkohol ($B_2$) und mindestens einem x-wertigen Alkohol ($C_x$), der mehr als zwei OH-Gruppen aufweist, wobei x eine Zahl größer 2 ist, wobei die Gesamtmischung der eingesetzten Alkohole eine mittlere Funktionalität von 2,1 bis 10 aufweist,

wobei

n) bis zu 50 Mol-%, bevorzugt bis zu 40 Mol-%, besonders bevorzugt bis zu 30 Mol-%, und insbesondere bevorzugt bis zu 20 Mol-% bezogen auf die gemäß l) und m) umgesetzten Alkohole $B_3$, $B_2$ und/oder $C_x$, eines hydrophoben langkettigen monofunktionellen Alkohols $E_1$ mit mindestens 8 C-Atomen mit umgesetzt werden können, und

o) optional anschließender Umsetzung mit einer langkettigen hydrophoben OH-reaktiven Verbindung F, wie einer Monocarbonsäure oder einem Monoisocyanat mit mindestens 8 C-Atomen,

p) optional anschließender Umsetzung mit Propylenoxid und/oder Butylenoxid.

wobei eine oder mehrere der nachstehenden Bedingungen erfüllt sind:

I) der Alkohol $B_3$ bzw. $B_2$ und/oder $C_x$ ist ein hydrophobes Alkoxylat auf Basis von Propylenoxid, Butylenoxid oder Styroloxid mit im Mittel mindestens 1 und höchstens 100 Oxyalkylen-Einheiten pro Startermolekül, und einem difunktionellen (für $B_2$), trifunktionellen (für $B_3$) oder x-funktionellen (für $C_x$) Startermolekül;

II) die Alkohole $B_3$ bzw. $B_2$ und/oder $C_x$ enthalten mindestens 20 Mol-%, bevorzugt mindestens 30 Mol-%, besonders bevorzugt mindestens 40 Mol-%, und ganz besonders bevorzugt mindestens 50 Mol-% eines langkettigen Diols bzw. Polyols mit mindestens 8 C-Atomen;

III) mindestens 10 Mol-% und höchstens 90 Mol-%, bevorzugt höchstens 70 Mol-%, besonders bevorzugt höchstens 50 Mol-%, und insbesondere bevorzugt höchstens 30 Mol-% bezogen auf die gemäß l) und m) umgesetzten Alkohole $B_3$, $B_2$ und/oder $C_x$ eines langkettigen Monoalkohols mit mindestens 8 C-Atomen werden mit umgesetzt;

IV) es wird anschließend mit 10 bis 100 Mol-%, bevorzugt 10 bis 80 Mol-%, besonders bevorzugt 20 bis 80 Mol-%, insbesondere bevorzugt 20 bis 60 Mol-% bezogen auf die mittlere Anzahl der OH-Gruppen des hyperverzweigten Polycarbonats, der langkettigen hydrophoben OH-reaktiven Verbindung F mit mindestens 8 C-Atomen umgesetzt,

V) es wird anschließend mit, pro Äquivalent OH-Gruppen des hyperverzweigten Polycarbonats, 1 bis 60, bevorzugt mit 2 bis 50, besonders bevorzugt mit 3 bis 40 und insbesondere bevorzugt mit 3 bis 30 Äquivalenten Propylenoxid, Butylenoxid oder Propylenoxid und Butylenoxid umgesetzt.

**8.** Verfahren nach Anspruch 7, **dadurch gekennzeichnet, dass**

I) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist.

9. Verfahren nach Anspruch 7, **dadurch gekennzeichnet, dass**

I) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und
III) mindestens 10 Mol-% und höchstens 90 Mol-%, bezogen auf die gemäß g) und h) umgesetzten Alkohole $B_3$, $B_2$ und/oder $C_x$ eines langkettigen Monoalkohols $E_1$ mit mindestens 8 C-Atomen mit umgesetzt werden.

10. Verfahren nach Anspruch 7, **dadurch gekennzeichnet, dass**

I) der Alkohol $B_3$ bzw. $B_2$ und/oder $C_x$ ein hydrophobes Alkoxylat auf Basis von Propylenoxid oder Butylenoxid mit im Mittel 1 bis 15 Oxyalkylen-Einheiten pro OH-Gruppe ist, und
IV) anschließend das Umsetzungsprodukt aus l) und m) mit 10 bis 100 Mol-%, bezogen auf die mittlere Anzahl der OH-Gruppen des hyperverzweigten Polyesters, mit einer langkettigen hydrophoben OH-reaktiven Verbindung $F_1$ mit mindestens 8 C-Atomen umgesetzt wird.

11. Verfahren nach einem der Ansprüche 1 bis 10, **dadurch gekennzeichnet, dass** man als Polyisocyanat A eine Verbindung auf Basis von a1) MDI und a2) Polyesterol einsetzt.

12. Verfahren nach einem der Ansprüche 1 bis 11, **dadurch gekennzeichnet, dass** höhermolekulare Verbindungen mit gegenüber Isocyanat reaktiven Gruppen neben dem hyperverzweigten Polyester oder dem hyperverzweigtes Polycarbonat ausschließlich ein oder mehrere Polyesterole eingesetzt werden.

13. Verfahren nach einem der Ansprüche 1 bis 12 wobei die hydrophobe Flüssigkeit Rohöl ist.

14. Verfahren nach einem der Ansprüche 1 bis 13, **dadurch gekennzeichnet, dass** der Polyurethanschaumstoff in ein mit Öl kontaminiertes Gewässer gegeben wird.

15. Ölbarriere, enthaltend einen Polyurethanschaumstoff nach einem der Ansprüche 1 bis 14.

16. Ölreservoir, enthaltend einen Polyurethanschaumstoff nach einem der Ansprüche 1 bis 14.

Europäisches
Patentamt

European
Patent Office

Office européen
des brevets

**EUROPÄISCHER RECHERCHENBERICHT**

Nummer der Anmeldung

EP 10 16 4188

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 911 781 A1 (ARIZONA CHEM [US]) 16. April 2008 (2008-04-16) * Absätze [0001], [0054], [0055], [0080] * * Beispiele 1-4 * ----- | 1-16 | INV. C08G18/40 C08G18/42 C08G18/44 C08G18/63 B01J20/22 |
| A | WO 2009/112576 A1 (BASF SE [DE]; MOHMEYER NILS [DE]; FRITZ RALF [DE]; HABICHT ANNIKA [DE]) 17. September 2009 (2009-09-17) * Seite 1, Zeilen 5-11 * * Seite 40, Zeilen 21-32 * * Seiten 41-46 * * Ansprüche 1-28 * ----- | 1-16 | B01J20/26 C02F1/00 C02F1/68 |

RECHERCHIERTE
SACHGEBIETE (IPC)

C08G
B01J
C02F

Der vorliegende Recherchenbericht wurde für alle Patentansprüche erstellt

| Recherchenort | Abschlußdatum der Recherche | Prüfer |
|---|---|---|
| Den Haag | 20. August 2010 | Bezard, Stéphane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 10 16 4188

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-2010

| Im Recherchenbericht angeführtes Patentdokument | Datum der Veröffentlichung | Mitglied(er) der Patentfamilie | Datum der Veröffentlichung |
|---|---|---|---|
| EP 1911781 A1 | 16-04-2008 | WO 2008043545 A1 | 17-04-2008 |
| WO 2009112576 A1 | 17-09-2009 | KEINE | |

Für nähere Einzelheiten zu diesem Anhang : siehe Amtsblatt des Europäischen Patentamts, Nr.12/82

EPO FORM P0461

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2738268
- WO 2008043545 A
- WO 2005074583 A
- WO 2009112576 A
- WO 05098763 A
- EP 250351 A
- DE 111394
- US 3304273 A
- US 3383351 A
- US 3523093 A
- DE 1152536
- DE 1152537
- EP 153639 A
- DE 3607447 A
- US 4764537 A
- WO 2008071622 A
- WO 2005026234 A

**In der Beschreibung aufgeführte Nicht-Patentliteratur**

- *die Angewandte Makromolekulare Chemie,* 1979, vol. 78, 67-74
- **H. FREY et al.** Degree of Branching. *Acta Polym.,* 1997, vol. 48, 30
- Electronic Release. Ullmann's Encyclopedia of Industrial Chemistry. Verlag Wiley-VCH, 2000
- **PIECHOTA ; RÖHR.** Integralschaumstoff. Carl-Hanser-Verlag, 1975
- Polyurethane. Kunststoffhandbuch. 1993, vol. 7